# EUROPEAN PATENT SPECIFICATION

(11) **EP 1 105 845 B1**
(45) Date of publication and mention of the grant of the patent: **14.12.2016**
(21) Application number: 00937257.4
(22) Date of filing: 15.06.2000
(51) Int. Cl.: G06T 15/20

(54) **METHOD AND APPARATUS FOR RENDERING IMAGE**
VERFAHREN UND VORRICHTUNG ZUR BILDHERSTELLUNG
PROCEDE ET APPAREIL DE RENDU D'IMAGES

(30) Priority: 18.06.1999 JP 17285999
(43) Date of publication of application: 13.06.2001
(73) Proprietor: Sony Interactive Entertainment Inc., Tokyo 108-0075 (JP)
(72) Inventor: AOKI, Sachiyo, Sony Computer Entertainment Inc., Minato-ku, Tokyo 107-0052 (JP)
(74) Representative: D Young & Co LLP
(86) International application number: PCT/JP2000/003916
(87) International publication number: WO 2000/079486

(56) References cited:
- EP-A- 0 727 764
- GB-A- 2 228 850

## Description

### Technical Field

The present invention relates to a method of and an apparatus for rendering an image of a number of objects of the same shape, e.g., a grassy plain waving in a breeze or sunflowers in crowds, a recording medium which stores a program for rendering such an image, and a program for rendering such an image.

### Background Art

Recently, various computer graphics (CG) processing techniques including hidden line processing, hidden surface removal, smooth shading, texture mapping, etc. have been in rapid progress in combination with quickly growing hardware technologies.

According to a general CG processing scheme, a plurality of three-dimensional shapes (objects) are generated by three-dimensional modeling of CAD, and a rendering process is performed by generating applying colors and shades to the objects, adding optical properties including mirror reflection, diffuse reflection, refraction, transparency, etc. to the objects, adding surface patterns to the objects, and plotting images depending on surroundings such as window and scenery reflections and ambient light.

When a number of objects of the same shape such as a grassy plain waving in a breeze or sunflowers in crowds are plotted, the above rendering process is performed on the generated objects.

Specifically, for processing an ordinary polygon, the perspective transformation is effected on the vertexes of the polygon by a geometry processor, and the obtained polygon is rendered in a rendering memory for display by a rendering processor.

For example, if n objects such as fishes are to be displayed, then n rendering processes (ordinary polygon processes) need to be carried out. Therefore, it is necessary to carry out (n x the number of polygon vertexes) perspective transformations and (n x the number polygons) rendering processes.

Therefore, if n objects such as fishes are to be displayed, for example, the calculations and the rendering processes are time-consuming, and the rate at which these objects are displayed on a display monitor is relatively low.

A previously proposed arrangement is disclosed in EP-A-0 727 764.

### Disclosure of Invention

It is therefore an object of the present invention to provide a method of and an apparatus for rendering an image, a recording medium which stores a program for rendering such an image, and a program for rendering such an image, by per-forming a normal rendering process a single object, for example, and applying a texture to other objects, so that the period of time required to make calculations and plot the objects can greatly be reduced, and the objects can be plotted of high quality.

A method of rendering an image according the present invention comprises the steps of a first rendering process of performing a first rendering process on at least one first object to render an image of the first object in an image memory, the first rendering process being performed in every image display processing; and a second, texture, rendering process of mapping the rendered image of the first object as a texture onto each of a plurality of second objects within the image memory, and rendering the second objects as the plurality of objects of the same shape in an area to be displayed of the image memory, the second rendering process being performed in respect of the display processing of each image.

According to the above method, since the normal rendering process is performed on at least one of many objects and the rendered image is applied as a texture to the remaining objects, the period of time required to make calculations and plot many objects can greatly be reduced, and the objects can be plotted of high quality.

In the above method, the step of performing the normal rendering process may comprise the step of rendering the image in the display area of the image memory.

Alternatively, the step of performing the normal rendering process may comprise the step of rendering the image in the non-display area of the image memory.

An apparatus for rendering an image according to the present invention comprises first rendering means for performing a rendering process on at least one first object to render an image of the first object in an image memory, in respect of the display processing of each image; and a second, texture, rendering means for mapping the rendered image of the first object as a texture onto each of a plurality of second objects within the image memory, and rendering the second objects as the plurality of objects of the same shape in an area to be displayed of the image memory, in display processing of each image.

According to the above apparatus, since the normal rendering process is performed on at least one of many objects and the rendered image is applied as a texture to the remaining objects, the period of time required to make calculations and plot many objects can greatly be reduced, and the objects can be plotted of high quality.

The detailed rendering means may comprise means for rendering the image in the display area of the image memory.

Alternatively, the detailed rendering means may comprise means for rendering the image in the non-display area of the image memory.

The above and other objects, features, and advantages of the present invention will become more apparent from the following description when taken in conjunction with the accompanying drawings in which preferred embodiments of the present invention are shown by way of illustrative example.

### Brief Description of Drawings

FIG. 1 is a block diagram of a general arrangement of an entertainment apparatus according to the present invention;
FIG. 2 is a view showing grass leaves as an object;
FIG. 3 is a view showing sunflowers as an object;
FIG. 4 is a diagram showing an example of a single detailed rendering cycle and (n-1) simple rendering cycles for a display area of an image memory;
FIG. 5 is a diagram showing a provisional object by way of example;
FIG. 6 is a functional block diagram of an object group plotting means according to first and second embodiments of the present invention;
FIG. 7 is a functional block diagram of a detailed rendering means in the object group plotting means according to the first embodiment;
FIG. 8 is a functional block diagram of a simple rendering means in the object group plotting means according to the first embodiment;
FIG. 9 is a diagram showing details of a detailed object information table and a simple object information table;
FIG. 10 is a diagram showing details of a detailed object file;
FIG. 11 is a diagram showing details of a simple object file;
FIG. 12 is a diagram showing details of a motion information table;
FIG. 13 is a flowchart of a processing sequence of the object group plotting means according to the first embodiment;
FIG. 14 is a flowchart of a processing sequence of the detailed rendering means in the object group plotting means according to the first embodiment;
FIG. 15 is a flowchart of a processing sequence of the simple rendering means in the object group plotting means according to the first embodiment;
FIG. 16 is a view showing an example of an object in the form of a dancing human being;
FIG. 17 is a diagram showing an example of a single detailed rendering cycle for a non-display area of an image memory and n simple rendering cycles for a display area of the image memory;
FIG. 18 is a functional block diagram of a detailed rendering means in an object group plotting means according to a second embodiment of the present invention;
FIG. 19 is a functional block diagram of a simple rendering means in the object group plotting means according to the second embodiment of the present invention;
FIG. 20 is a flowchart of a processing sequence of the object group plotting means according to the second embodiment;
FIG. 21 is a flowchart of a processing sequence of the detailed rendering means in the object group plotting means according to the second embodiment;
FIG. 22 is a flowchart of a processing sequence of the simple rendering means in the object group plotting means according to the second embodiment;
FIG. 23 is a diagram showing an example of an image which represents two objects close to each other; and
FIG. 24 is a diagram showing an example of an image which represents two objects biting into each other, with polygon boundaries being seen.

### Best Mode for Carrying Out the Invention

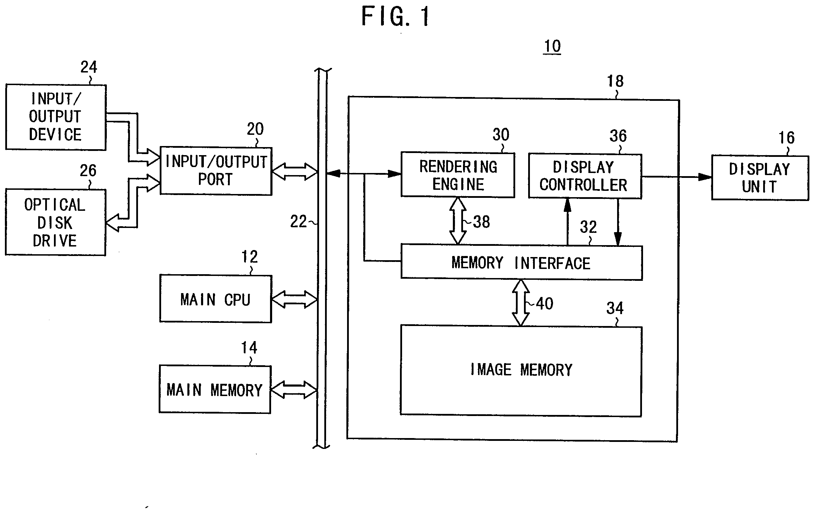

Embodiments in which a method of and an apparatus for rendering an image, as applied to an entertainment apparatus (hereinafter, referred as an entertainment apparatus) for performing three-dimensional CG processing, will be described below with reference to FIGS. 1 through 24.

As shown in FIG. 1, an entertainment apparatus 10 comprises a main CPU 12 for controlling the entertainment apparatus 10, a main memory 14 for storing various programs to be run and various data, an image processor 18 for generating image data under the control of the main CPU 12 and outputting the generated image data to a display unit 16, e.g., a CRT, and an input/output port 20 for sending data to and receiving data from external devices.

The main memory 14, the image processor 18, and the input/output port 20 are connected to the main CPU 12 via a bus 22. To the input/output port 20, there are connected an input/output device 24 for inputting data (key entry data, coordinate data, etc.) to the entertainment apparatus 10, and an optical disk drive 26 for playing back an optical disk such as a CD-ROM or the like in which various programs and data (object-related data, texture data, etc.).

The image processor 18 comprises a rendering engine 30, a memory interface 32, an image memory 34, and a display controller 36 such as a programmable CRT controller or the like.

The rendering engine 30 serves to render image data in the image memory 34 via the memory interface 32 based on a rendering command supplied from the main CPU 12.

A first bus 38 is connected between the memory interface 32 and the rendering engine 30, and a second bus 40 is connected between the memory interface 32 and the image memory 34. Each of the first and second buses 38, 40 has a 128-bit width for allowing the rendering engine 30 to render image data in the image memory 34 at a high speed.

The rendering engine 30 is capable of rendering image data of 320 x 240 pixels or image data of 640 x 480 pixels according to the NTSC or PAL system on a real-time fashion, i.e., in 1/60 seconds to 1/30 seconds, more than ten times to several ten times.

The image memory 34 is of a unified memory structure that is able to designate a non-display area 34a and a display area 34b as the same area.

The image controller 36 writes texture data read via the optical disk drive 26 or texture data generated in the main memory 14 via the memory interface 32 into the non-display area 34a of the image memory 34, and reads image data rendered in the display area 34b of the image memory 34 via the memory interface 32 and outputs the read image data to the display unit 16 to display an image thereon.

A characteristic function of the entertainment apparatus 10, i.e., a function to plot a number of objects of identical shape at a high speed, will be described below.

This function is recorded as a program (object group plotting means) in an optical disk. The function can be read from the optical disk, stored into the main memory 14 via the optical disk drive 26, and performed by being executed from a certain address thereof.

The object group plotting means performs a normal rendering process, which includes texture expression and hidden surface removal and carries out physical calculations, perspective transformation, and polygon rendering, on at least one object, maps the rendered image as a texture onto a provisional object composed of a small number of polygons, and renders the object in an area to be displayed.

Several embodiments of the object group plotting means will be described below.

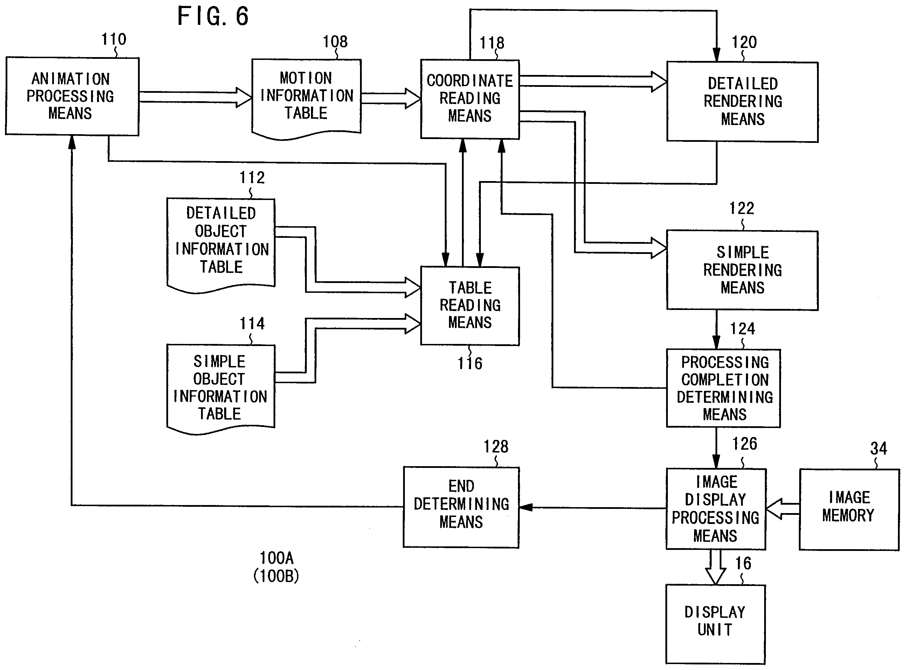

An object group plotting means 100A (see FIG. 6) according to a first embodiment of the present invention performs a normal rendering process on at least one object, renders the object image in the display area 34b of the image memory 34, maps the image rendered in the display area 34b as a texture onto a provisional object, composed of a small number of polygons, for remaining (n - 1) objects, and renders the object image in the display area 34b.

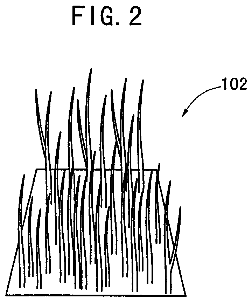

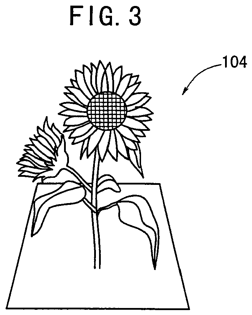

For example, an object 102 of grass leaves shown in FIG. 2 or an object 104 of sunflowers shown in FIG. 3 is prepared. A normal rendering process is performed on the object 102 or 104 based on coordinate data determined by an application program, and the object image is rendered in an area A, for example, in the display image 34b of the image memory 34.

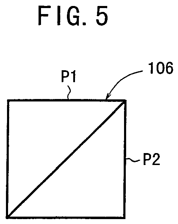

For storage in other areas B1 - B15 in the display image 34b of the image memory 34, a provisional object 106 composed of a small number of polygons, e.g., two polygons P1, P2, is prepared, as shown in FIG. 5.

Based on coordinate data determined for each of the areas B1 - B15 according to the application program, the object image rendered in the area A is mapped as a texture onto the provisional object 106, which is then rendered in a corresponding one of the areas B1 - B15.

By repeating the above process for the areas B1 - B15, it is possible to plot a grass plain waving in a breeze on the display screen or sunflowers in crowds that turn with time on the display screen.

The arrangement and processing sequence of the object group plotting means 100A according to the first embodiment will be described below with reference to FIGS. 6 through 15.

As shown in FIG. 6, the object group plotting means 100A comprises an animation processing means 110 operable by predetermined application software, for successively updating data stored in a motion information table 108 to move an object according to a predetermined sequence, a table reading means 116 for reading information of a single object from a detailed object information table 112 or a simple object information table 114, a coordinate reading means 118 for successively reading motion coordinates from the motion information table 108, a detailed rendering means 120 for plotting an object according to a normal rendering process, a simple rendering means 122 for plotting an object according to a simpler texture applying process, a processing completion determining means 124 for determining whether the process has been completed with respect to all objects or not, an image display processing means 126 for displaying a group of objects rendered in the image memory 34 on the display unit 16, and an end determining means 128 for determining whether there is a request to end the program or not.

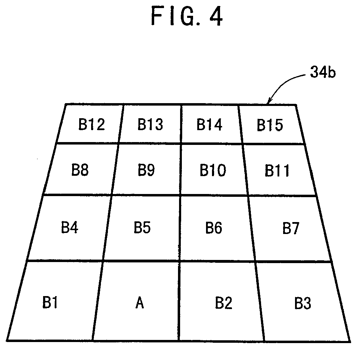

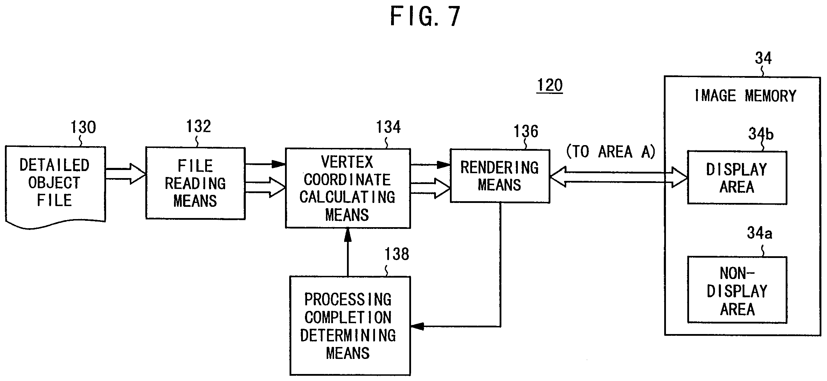

As shown in FIG. 7, the detailed rendering means 120 comprises a file reading means 132 for reading a detailed object file 130, a vertex coordinate calculating means 134 for calculating vertex coordinates of polygons based on the present motion coordinates, a rendering means 136 for performing the normal rendering process, including texture expression and hidden surface removal, on a polygon and rendering the polygon image in the area A (see FIG. 4), for example, in the display area 34b of the image memory 34, and a processing completion determining means 138 for determining whether the rendering process has been completed with respect to all polygons.

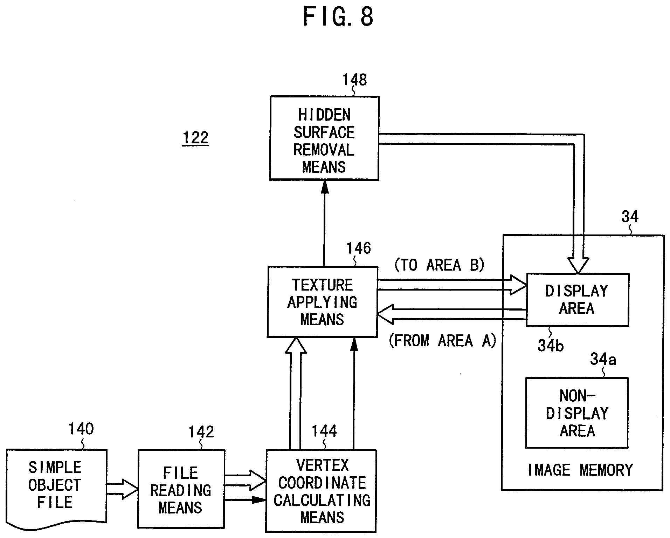

As shown in FIG. 8, the simple rendering means 122 comprises a file reading means 142 for reading a simple object file 140, a vertex coordinate calculating means 144 for calculating vertex coordinates of polygons based on the present motion coordinates, a texture applying means 146 for applying the image rendered in the area A (see FIG. 4), for example, in the display area 34b of the image memory 34 as a texture to polygons at an enlarged or reduced scale depending on the display ranges of the polygons, and a hidden surface removal means 148 for performing hidden surface removal.

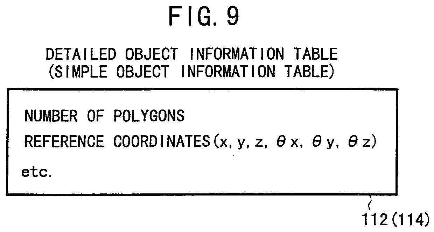

Details of the various tables and files will be described below with reference to FIGS. 9 through 12.

As shown in FIG. 9, the detailed object information table 112 and the simple object information table 114 store information required for each object, i.e., the number of polygons and reference coordinates. The reference coordinates comprise xyz coordinates (x, y, z) at the center (center of gravity) of the object and angular displacements (θx, θy, θz) about the respective axes. Initial values of the angular displacements (θx, θy, θz) are (θx, θy, θz) = (0, 0, 0).

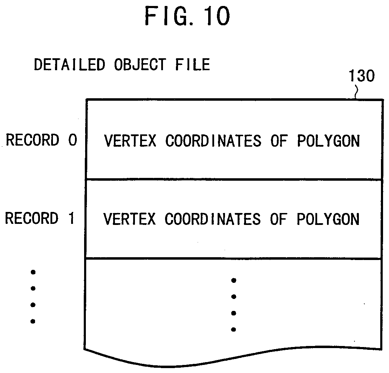

As shown in FIG. 10, the detailed object file 130 stores the vertex coordinates of a number of polygons that make up a normal object. The vertex coordinates are based on the reference coordinates of the normal object.

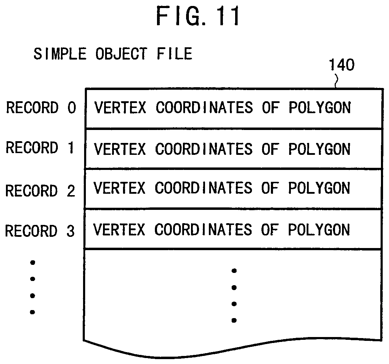

As shown in FIG. 11, the simple object file 140 stores the vertex coordinates of a few (e.g., two) polygons that make up a simple object. The vertex coordinates are based on the reference coordinates of the simple object. An object which is made up of a few polygons stored in the simple object file 140 may be defined as the provisional object 106.

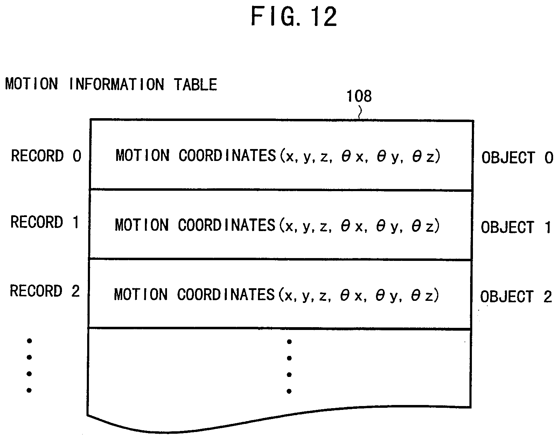

As shown in FIG. 12, the motion information table 108 stores motion coordinates of each object, and is generated by the animation processing means 110. The motion coordinates are representative of how much each object has been displaced and/or rotated from the reference coordinates thereof. Consequently, it is possible to calculate new vertex coordinates of a polygon after being displaced and/or rotated, from the reference coordinates and the motion coordinates of the object and the vertex coordinates of the polygon.

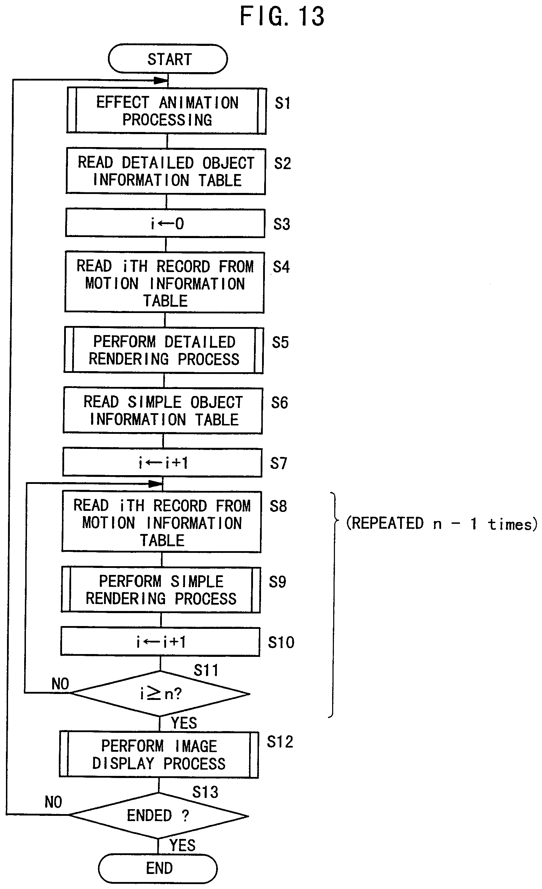

In the object group plotting means 100A according to the first embodiment, the animation processing means 110 successively updates the data in the motion information table 108 in order to move an object according to a predetermined sequence in step S1 shown in FIG. 13.

In step S2, the table reading means 116 reads information of an object which is to be processed according to the normal rendering process, from the detailed object information table 112.

Then, in step S3, the object group plotting means 100A stores an initial value "0" in an index register i for searching for an object, thus initializing the index register i.

In step S4, the coordinate reading means 118 reads the present motion coordinates at an ith object from the motion information table 108. Thereafter, in step S5, the detailed rendering means 120 performs its processing.

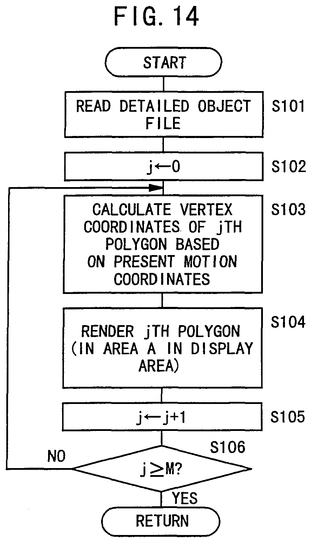

A processing sequence of the detailed rendering means 120 will be described below with reference to FIGS. 7 and 14.

In step S101 shown in FIG. 14, the file reading means 132 reads the detailed object file 130. Thereafter, the detailed rendering means 120 stores "0" in an index register j for searching for a polygon, thus initializing the index register j in step S102.

In step S103, the vertex coordinate calculating means 134 calculates vertex coordinates of a jth polygon based on the present motion coordinates. Thereafter, the rendering means 136 performs the normal rendering process, including texture expression and hidden surface removal, on the jth polygon, and renders the polygon image in the area A (see FIG. 4), for example, in the display area 34b of the image memory 34 in step S104.

Then, in step S105, the detailed rendering means 120 increments the index register j by + 1. In step S106, the processing completion determining means 138 determines whether the process has been completed with respect to all polygons or not, based on whether or not the value of the index register j is equal to or greater than the number M of polygons contained in the object.

If the process has not been completed with respect to all polygons, then control goes back to step S103 to calculate vertex coordinates of a next polygon and performs the normal rendering process on the next polygon. If the process has been completed with respect to all polygons, then the processing sequence of the detailed rendering means 120 is brought to an end.

The detailed rendering means 120, therefore, renders the object produced by the normal rendering process in the area A in the display area 34b of the image memory 34.

Control then goes back to the main routine shown in FIG. 13. In step S6, the table reading means 116 reads information of an object to be rendered according to the simple texture applying process, from the simple object information table 114.

In step S7, the object group plotting means 100A increments the index register i by + 1. Thereafter, in step S8, the coordinate reading means 118 reads the present motion coordinates at the ith object from the motion information table 108. Thereafter, in step S9, the simple rendering means 122 performs its processing.

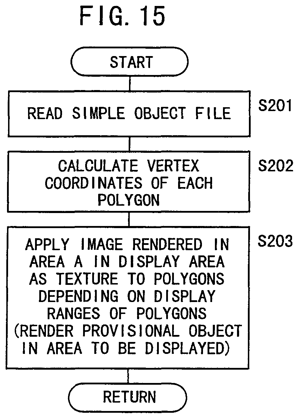

A processing sequence of the simple rendering means 122 will be described below with reference to FIGS. 8 and 15.

In step S201 shown in FIG. 15, the file reading means 142 reads the simple object file 140. Thereafter, in step S202, the vertex coordinate calculating means 144 calculates vertex coordinates of all polygons registered in the simple object file 140 based on the present motion coordinates.

In step S203, the texture applying means 146 applies the image rendered in the area A, for example, in the display area 34b of the image memory 34 as a texture to the polygons at an enlarged or reduced scale depending on the display ranges of the polygons. Specifically, the texture applying means 146 maps the image rendered in the area A as a texture onto the provisional object 106 which is made up of a small number of polygons. At this time, the provisional image 106 is rendered in an area to be displayed of the display area 34b of the image memory 34, while the hidden surface removal means 148 is performing hidden surface removal on the provisional image 106.

When the processing in step S203 is finished, the processing sequence of the simple rendering means 122 comes to an end.

The simple rendering means 122, therefore, renders the provisional object 106, which has been generated by applying a simple texture, in a predetermined area B (e.g., one of the areas B1 - B15 shown in FIG. 4) in the display area 34b of the image memory 34.

Control then goes back to the main routine shown in FIG. 13. In step S10, the object group plotting means 100A increments the index register i by + 1. Thereafter, in step S11, the processing completion determining means 124 determines whether the process has been completed with respect to all objects or not, based on whether or not the value of the index register i is equal to or greater than the number n of objects registered in the simple object information table 114.

If the process has not been completed with respect to all objects, control returns to step S8 for the simple rendering means 122 to render an image by applying a simple texture. The processing in steps S8 - S11 is repeated (n - 1) times.

When the process has been completed with respect to all provisional objects 106, control proceeds to step S12 in which the image display processing means 126 displays a group of objects rendered in the display area 34b of the image memory 34 on the display unit 16.

In step S13, the end determining means 128 determines whether there is a request to end the processing of the object group plotting means 100A or not. If there is no such request, control goes back to step S1 to perform a single detailed rendering cycle for the display area 34b and (n - 1) simple rendering cycles for the display area 34b based on the motion coordinates of each object updated by a next animation process. If there is a request to end the processing of the object group plotting means 100A, then the processing of the object group plotting means 100A is ended.

With the object group plotting means 100A according to the first embodiment, therefore, for rendering n objects in the display area 34b of the image memory 34, the normal rendering process is performed on at least one object to render the object in the area A of the display area 34, and the image rendered in the area A of the display area 34b is mapped as a texture onto the provisional object 106 for remaining (n - 1) objects, and rendered in the display area 34b. Therefore, the cost of calculations and rendering for expressing images that cannot be expressed by textures only, e.g., an image of a grassy plain waving in a breeze or an image of sunflowers in crowds that turn with time, can effectively be reduced.

Inasmuch as the provisional object 106 is rendered by mapping an image produced according to the normal rendering process as a texture, more complex expressions than images rendered with prepared textures can be rendered. For example, deformations of objects and viewpoint transformations can be expressed freely and smoothly.

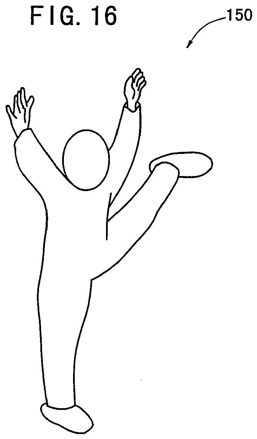

An object group plotting means 100B according to a second embodiment of the present invention will be described below with reference to FIGS. 16 through 24.

The object group plotting means 100B according to the second embodiment, for rendering n objects in the display area 34b of the image memory 34, performs a normal rendering process on at least one object, renders the object image in the non-display area 34a of the image memory 34, maps the image rendered in the non-display area 34a as a texture onto a provisional object 106 as n objects, and renders the object image in the display area 34b.

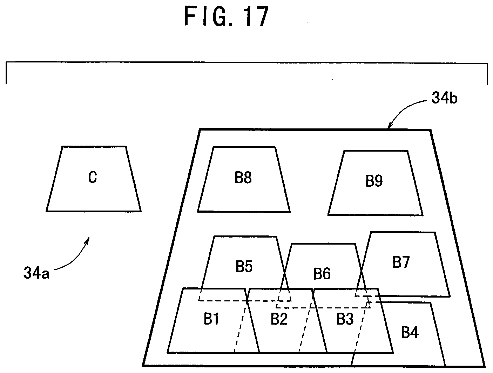

For example, as shown in FIG. 16, an object 150 representing a dancing human being is prepared. A normal rendering process is performed on the object 150 based on coordinate data determined by an application program, and the object image is rendered in an area C in the non-display image 34a of the image memory 34, as shown in FIG. 17.

For storage in other areas B1 - B9 in the display image 34b of the image memory 34, a provisional object 106 composed of a small number of polygons, e.g., two polygons P1, P2, is prepared, as shown in FIG. 5.

Based on coordinate data determined for each of the areas B1 - B9 according to the application program, the object image rendered in the area C is mapped as a texture onto the provisional object 106, which is then rendered in a corresponding one of the areas B1 - B9.

By repeating the above process for the areas B1 - B9, it is possible to plot a group of people dancing in synchronism with each other on the display screen.

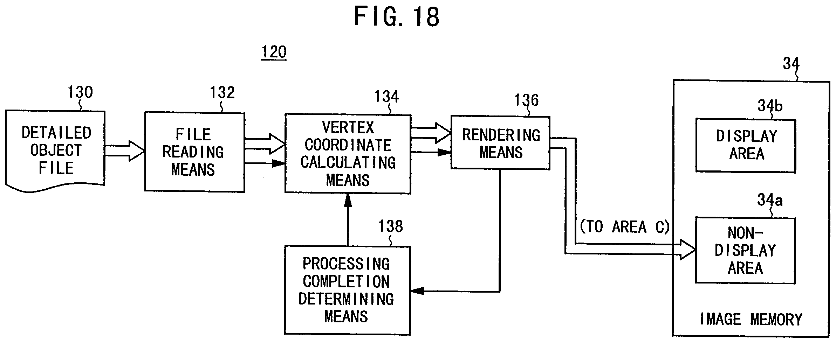

The arrangement and processing sequence of the object group plotting means 100B according to the second embodiment will be described below with reference to FIGS. 18 through 24.

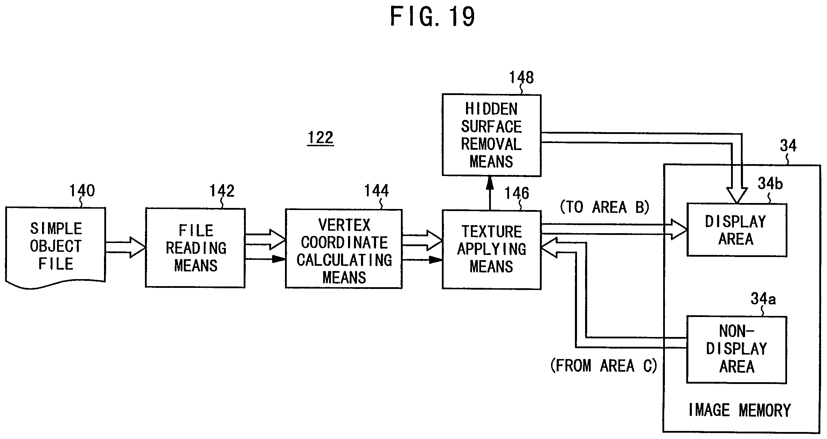

The object group plotting means 100B according to the second embodiment is of substantially the same arrangement as the object group plotting means 100A according to the first embodiment, but differs therefrom with respect to the following aspects:
(1) As shown in FIG. 18, the rendering means 136 of the detailed rendering means 120 performs the normal rendering process on each of the polygons that make up one object, and renders the image in the area C (see FIG. 17), for example, in the non-display area 34a of the image memory 34.
(2) As shown in FIG. 19, the texture applying means 146 of the simple rendering means 122 maps the image rendered in the area C in the non-display area 34a of the image memory 34 as a texture onto each of the polygons that make up one object.

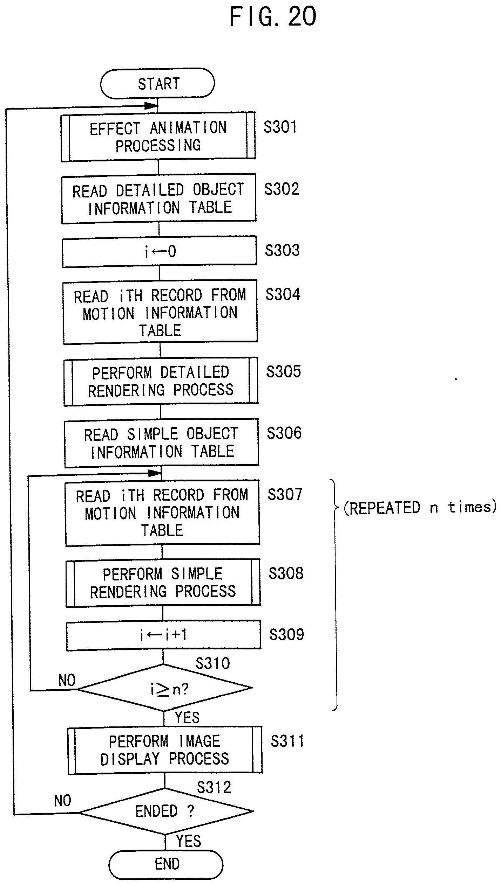

A processing sequence of the object group plotting means 100B according to the second embodiment will be described below with reference to FIGS. 20 through 22.

The animation processing means 110 successively updates the data in the motion information table 108 in order to move an object according to a predetermined sequence in step S301 shown in FIG. 20.

In step S302, the table reading means 116 reads information of an object which is to be processed according to the normal rendering process, from the detailed object information table 112.

Then, in step S303, the object group plotting means 100B stores an initial value "0" in an index register i for searching for an object, thus initializing the index register i.

In step S304, the coordinate reading means 118 reads the present motion coordinates at an ith object from the motion information table 108. Thereafter, in step S305, the detailed rendering means 120 performs its processing.

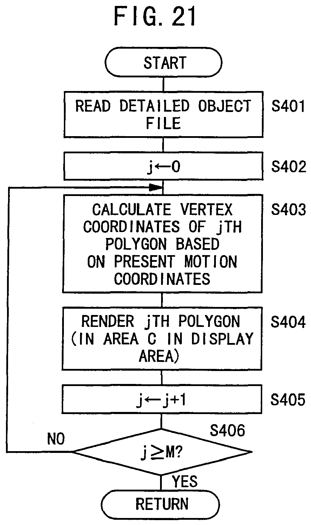

A processing sequence of the detailed rendering means 120 will be described below with reference to FIGS. 18 and 21.

In step S401 shown in FIG. 21, the file reading means 132 reads the detailed object file 130. Thereafter, the detailed rendering means 120 stores "0" in an index register j for searching for a polygon, thus initializing the index register j in step S402.

In step S403, the vertex coordinate calculating means 134 calculates vertex coordinates of a jth polygon based on the present motion coordinates. Thereafter, the rendering means 136 performs the normal rendering process, including texture expression and hidden surface removal, on the jth polygon, and renders the polygon image in the area C (see FIG. 17), for example, in the non-display area 34a of the image memory 34 in step S404.

Then, in step S405, the detailed rendering means 120 increments the index register j by + 1. In step S406, the processing completion determining means 138 determines whether the process has been completed with respect to all polygons or not, based on whether or not the value of the index register j is equal to or greater than the number M of polygons contained in the object.

If the process has not been completed with respect to all polygons, then control goes back to step S403 to calculate vertex coordinates of a next polygon and performs the normal rendering process on the next polygon. If the process has been completed with respect to all polygons, then the processing sequence of the detailed rendering means 120 is brought to an end.

The detailed rendering means 120, therefore, renders the object produced by the normal rendering process in the area C in the non-display area 34a of the image memory 34.

Control then goes back to the main routine shown in FIG. 20. In step S306, the table reading means 116 reads information of an object to be rendered according to the simple texture applying process, from the simple object information table 114.

In step S307, the coordinate reading means 118 reads the present motion coordinates at the ith object from the motion information table 108. Thereafter, in step S308, the simple rendering means 122 performs its processing.

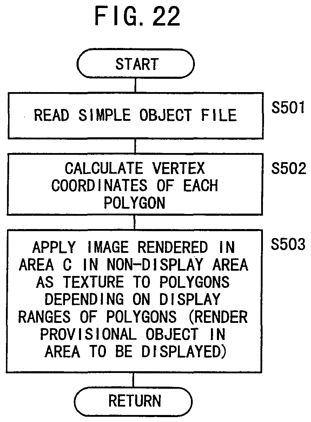

A processing sequence of the simple rendering means 122 will be described below with reference to FIG. 22.

In step S501 shown in FIG. 22, the file reading means 142 reads the simple object file 140. Thereafter, in step S502, the vertex coordinate calculating means 144 calculates vertex coordinates of all polygons registered in the simple object file 140 based on the present motion coordinates.

In step S503, the texture applying means 146 applies the image rendered in the area C, for example, in the non-display area 34a of the image memory 34 as a texture to the polygons at an enlarged or reduced scale depending on the display ranges of the polygons. Specifically, the texture applying means 146 maps the image rendered in the area C as a texture onto the provisional object 106 which is made up of a small number of polygons. At this time, the provisional image 106 is rendered in an area to be displayed of the display area 34b of the image memory 34, while the hidden surface removal means 148 is performing hidden surface removal on the provisional image 106.

When the processing in step S503 is finished, the processing sequence of the simple rendering means 122 comes to an end.

The simple rendering means 122, therefore, renders the provisional object 106, which has been generated by applying a simple texture, in a predetermined area B (e.g., one of the areas B1 - B9 shown in FIG. 17) in the display area 34b of the image memory 34.

Control then goes back to the main routine shown in FIG. 20. In step S309, the object group plotting means 100B increments the index register i by + 1. Thereafter, in step S310, the processing completion determining means 124 determines whether the process has been completed with respect to all provisional objects 106 or not, based on whether or not the value of the index register i is equal to or greater than the number n of provisional objects registered in the simple object information table 114.

If the process has not been completed with respect to all provisional objects 106, control returns to step S307 for the simple rendering means 122 to render an image by applying a simple texture. The processing in steps S307 - S310 is repeated n times.

When the process has been completed with respect to all provisional objects 106, control proceeds to step S311 in which the image display processing means 126 displays a group of objects rendered in the display area 34b of the image memory 34 on the display unit 16.

In step S312, the end determining means 128 determines whether there is a request to end the processing of the object group plotting means 100B or not. If there is no such request, control goes back to step S301 to perform a single detailed rendering cycle for the non-display area 34a and n simple rendering cycles for the display area 34b based on the motion coordinates of each object updated by a next animation process. If there is a request to end the processing of the object group plotting means 100B, then the processing of the object group plotting means 100B is ended.

With the object group plotting means 100B according to the second embodiment, therefore, for rendering n objects in the display area 34b of the image memory 34, the normal rendering process is performed on at least one object to render the object in non-display area 34a, and the image rendered in the non-display area 34a is mapped as a texture onto n provisional objects 106, and rendered in the display area 34b. Therefore, the cost of calculations and rendering for expressing images that cannot be expressed by textures only, e.g., smooth motions, dynamic motions, and interactive viewpoint transformations, can effectively be reduced. Therefore, an image of a group of people dancing in synchronism with each other or an image of many enemy robots that attack all at once can be expressed simply at a low cost. Inasmuch as the provisional object 106 is rendered by mapping an image produced according to the normal rendering process as a texture, more complex expressions than images rendered with prepared textures can be rendered. For example, deformations of objects and viewpoint transformations can be expressed freely and smoothly.

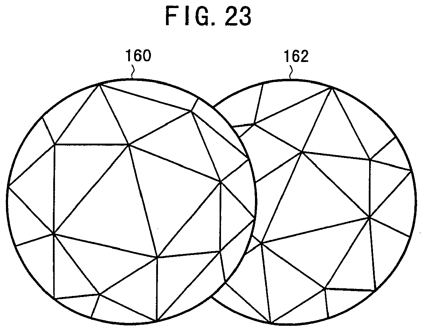

In the first and second embodiments, since one object is plotted as a unitary texture, the following image processing error can be alleviated:
If all objects are plotted in detail polygon by polygon according to the normal rendering process, then when an image of a first object 160 and a second object 162 close to each other is expressed, as shown in FIG. 23, polygons of these objects may possibly be wrongly arranged in their layering order depending on the calculating error in the imaging process or the accuracy of the hidden removal (Z buffering process etc.) or the like.

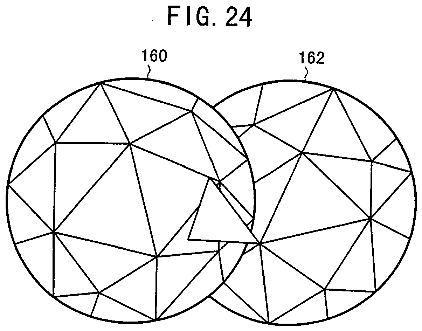

If such a layering error occurs, then when the first object 160 and the second object 162 are viewed by naked eye, as shown in FIG. 24, they look as if biting each other or polygon boundaries are made visible.

With the object group plotting means 100A, 100B according to the first and second embodiments, as described above, since one object is rendered with a texture applied to a small number of polygons, the processing operation and the time and cost required thereby may be reduced when the objects need to be determined (processed) for accurate layering, and the first object 160 and the second object 162 do not look as if biting each other.

With the method of and the apparatus for rendering an image according to the present invention, as described above, one object is processed according to the normal rendering process, and other objects are simply processed by the application of a texture. Consequently, the period of time required to make calculations and plot many objects can greatly be reduced, and the objects can be plotted of high quality.

Furthermore, by using the recording medium according to the present invention, it is possible to easily perform an image rendering process which greatly reduces the period of time required to make calculations and plot many objects and plots objects of high quality.

Although certain preferred embodiments of the present invention have been shown and described in detail, it should be understood that various changes and modifications may be made therein without departing from the scope of the appended claims.

## Claims

1. A method of rendering an image of a plurality of objects of the same shape, comprising the steps of:
a first rendering process of performing a first rendering process on at least one first object (102, 104) to render an image of the first object in an image memory (34), the first rendering process being performed in every image display processing; and
a second, texture, rendering process of mapping the rendered image of the first object as a texture onto each of a plurality of second objects (106) within the image memory (34), a second object being composed of fewer polygons than a first object, and rendering the second objects (106) as the plurality of objects of the same shape in an area (34b) to be displayed of the image memory (34), the second rendering process being performed in respect of the display processing of each image.

2. A method according to claim 1, wherein said first rendering process of performing the rendering process on the first object (102, 104) renders the image in the display area (34b) of the image memory (34).

3. A method according to claim 1, wherein said first rendering process of performing the rendering process on the first object (102, 104)renders the image in a non-display area (34a) of the image memory (34).

4. An apparatus for rendering an image of a plurality of objects of the same shape, the apparatus comprising:
first rendering means (120) for performing a rendering process on at least one first object (102, 104) to render an image of the first object in an image memory (34), in respect of the display processing of each image; and
a second, texture, rendering means (122) for mapping the rendered image of the first object as a texture onto each of a plurality of second objects (106) within the image memory (34), a second object being composed of fewer polygons than a first object, and rendering the second objects (106) as the plurality of objects of the same shape in an area (34b) to be displayed of the image memory (34), in display processing of each image.

5. An apparatus according to claim 4, wherein said first rendering means (120) performs the rendering process on the first object (102, 104) to the image in the display area (34b) of the image memory (34).

6. An apparatus according to claim 4, wherein said first rendering means (120) performs the rendering process on the first object (102, 104) to render the image in a non-display area (34a) of the image memory (34).

7. Computer software which, when executed by a computer, causes the computer to carry out the steps of any one of claims 1 to 3.

8. A recording medium on which software according to claim 7 is recorded.

## Patentansprüche

1. Verfahren zum Rendern eines Bildes von mehreren Objekten der gleichen Form, das die folgenden Schritte umfasst:
ein erster Renderingprozess des Anwendens eines ersten Renderingprozesses auf wenigstens ein erstes Objekt (102, 104), um ein Bild des ersten Objekts in einem Bildspeicher (34) zu rendern, wobei der erste Renderingprozess in jeder Bildanzeigeverarbeitung angewendet wird; und
ein zweiter, Textur-, Renderingprozess des Mappings des gerenderten Bildes des ersten Objekts als eine Textur auf jedes der mehreren zweiten Objekte (106) innerhalb des Bildspeichers (34), wobei ein zweites Objekt aus weniger Polygonen als das erste Objekt zusammengesetzt ist, und des Renderns des zweiten Objekts (106) als die mehreren Objekte der gleichen Form in einem anzuzeigenden Bereich (34b) des Bildspeichers (34), wobei der zweite Renderingprozess im Hinblick auf die Anzeigeverarbeitung jedes Bildes angewendet wird.

2. Verfahren nach Anspruch 1, wobei der erste Renderingprozess des Anwendens des Renderingprozesses auf das erste Objekt (102, 104) das Bild in dem Anzeigebereich (34b) des Bildspeichers (34) rendert.

3. Verfahren nach Anspruch 1, wobei der erste Renderingprozess des Anwendens des Renderingprozesses auf das erste Objekt (102, 104) das Bild in einem Nichtanzeigebereich (34a) des Bildspeichers (34) rendert.

4. Einrichtung zum Rendern eines Bildes von mehreren Objekten der gleichen Form, wobei die Einrichtung Folgendes umfasst:
ein erstes Renderingmittel (120) zum Anwenden eines Renderingprozesses auf wenigstens ein erstes Objekt (102, 104) in Hinblick auf die Anzeigeverarbeitung jedes Bildes, um ein Bild des ersten Objekts in einem Bildspeicher (34) zu rendern; und
ein zweites, Textur-, Renderingmittel (122) zum Mapping des gerenderten Bildes des ersten Objekts als eine Textur auf jedes von mehreren zweiten Objekten (106) innerhalb des Bildspeichers (34), wobei ein zweites Objekt aus weniger Polygonen als das erste Objekt zusammengesetzt ist, und zum Rendern der zweiten Objekte (106) als die mehreren Objekte der gleichen Form in einem anzuzeigenden Bereich (34b) des Bildspeichers (34) in einer Anzeigeverarbeitung jedes Bildes.

5. Einrichtung nach Anspruch 4, wobei das erste Renderingmittel (120) den Renderingprozess auf das erste Objekt (102, 104) anwendet, um das Bild in dem Anzeigebereich (34b) des Bildspeichers (34) zu.

6. Einrichtung nach Anspruch 4, wobei das erste Renderingmittel (120) den Renderingprozess auf das erste Objekt (102, 104) anwendet, um das Bild in einem Nichtanzeigebereich (34a) des Bildspeichers (34) zu rendern.

7. Computersoftware, die, wenn sie von einem Computer ausgeführt wird, veranlasst, dass der Computer die Schritte von einem der Ansprüche 1 bis 3 ausführt.

8. Aufnahmemedium, auf dem die Software nach Anspruch 7 aufgenommen ist.

## Revendications

1. Procédé de rendu d'une image d'une pluralité d'objets de la même forme, comprenant les étapes suivantes :
un premier processus de rendu consistant à effectuer un premier processus de rendu sur au moins un premier objet (102, 104) pour effectuer le rendu d'une image du premier objet dans une mémoire d'images (34), le premier processus de rendu étant effectué lors du traitement d'affichage de chaque image ; et
un deuxième processus de rendu de texture consistant à cartographier l'image rendue du premier objet comme une texture sur chaque objet d'une pluralité de deuxièmes objets (106) à l'intérieur de la mémoire d'images (34), un deuxième objet étant composé de moins de polygones qu'un premier objet, et effectuer le rendu des deuxièmes objets (106) comme la pluralité d'objets de la même forme dans une zone (34b) à afficher de la mémoire d'images (34), le deuxième processus de rendu étant effectué relativement au traitement d'affichage de chaque image.

2. Procédé selon la revendication 1, dans lequel ledit premier processus de rendu consistant à effectuer le processus de rendu sur le premier objet (102, 104) effectue le rendu de l'image dans la zone d'affichage (34b) de la mémoire d'images (34).

3. Procédé selon la revendication 1, dans lequel ledit premier processus de rendu consistant à effectuer le processus de rendu sur le premier objet (102, 104) effectue le rendu de l'image dans une zone de non-affichage (34a) de la mémoire d'images (34).

4. Appareil destiné à effectuer le rendu d'une image d'une pluralité d'objets de la même forme, l'appareil comprenant :
un premier moyen de rendu (120) destiné à effectuer un processus de rendu sur au moins un premier objet (102, 104) pour effectuer le rendu d'une image du premier objet dans une mémoire d'images (34), relativement au traitement d'affichage de chaque image ; et
un deuxième moyen de rendu de texture (122) destiné à cartographier l'image rendue du premier objet comme une texture sur chaque objet d'une pluralité de deuxièmes objets (106) à l'intérieur de la mémoire d'images (34), un deuxième objet étant composé de moins de polygones qu'un premier objet, et effectuer le rendu des deuxièmes objets (106) comme la pluralité d'objets de la même forme dans une zone (34b) à afficher de la mémoire d'images (34), dans le traitement d'affichage de chaque image.

5. Appareil selon la revendication 4, dans lequel ledit premier moyen de rendu (120) effectue le processus de rendu sur le premier objet (102, 104) pour l'image dans la zone d'affichage (34b) de la mémoire d'images (34).

6. Appareil selon la revendication 4, dans lequel ledit premier moyen de rendu (120) effectue le processus de rendu sur le premier objet (102, 104) pour effectuer le rendu de l'image dans une zone de non-affichage (34a) de la mémoire d'images (34).

7. Logiciel informatique qui, exécuté par un ordinateur, amène l'ordinateur à réaliser les étapes de l'une quelconque des revendications 1 à 3.

8. Support d'enregistrement sur lequel est enregistré le logiciel selon la revendication 7.
